# EUROPÄISCHE PATENTSCHRIFT

(11) **EP 2 025 213 B1**
(45) Veröffentlichungstag und Bekanntmachung des Hinweises auf die Patenterteilung: **30.03.2011**
(21) Anmeldenummer: 07729231.6
(22) Anmeldetag: 16.05.2007
(51) Int. Cl.: H05K 7/12, H05K 7/14, G02B 9/02, G02B 9/04, G02B 9/06, G01D 11/24, G01L 19/14, G01L 19/00

(54) **SENSORBAUGRUPPE MIT EINEM AN EINER WAND MONTIERBAREN GEHÄUSE**
SENSOR MODULE WITH A HOUSING WHICH MAY BE MOUNTED ON A WALL
MODULE DE DÉTECTION COMPRENANT UN LOGEMENT QUI PEUT ÊTRE MONTÉ SUR UNE PAROI

(30) Priorität: 18.05.2006 DE 102006023464
(43) Veröffentlichungstag der Anmeldung: 18.02.2009
(73) Patentinhaber: Continental Automotive GmbH, 30165 Hannover (DE)
(72) Erfinder: CHRISTOPH, Markus, 93055 Regensburg (DE); PLANKL, Christian, 93055 Burgweinting (DE)
(86) Internationale Anmeldenummer: PCT/EP2007/054783
(87) Internationale Veröffentlichungsnummer: WO 2007/135070

(56) Entgegenhaltungen:
- EP-A- 1 146 326
- EP-A2- 0 984 258
- WO-A-00/71978

## Beschreibung

Die Erfindung betrifft eine Sensorbaugruppe mit einem Gehäuse, das an einer Durchgangsöffnung einer Anbaufläche montierbar ist, durch welche Durchgangsöffnung das Gehäuse der Sensorbaugruppe zumindest teilweise durchragt, wenn das Gehäuse an der Anbaufläche angeordnet ist. Die Sensorbaugruppe umfasst weiter einen Dichtkörper, der zwischen der Außenseite des Gehäuses und der Durchgangsöffnung der Anbaufläche vorgesehen ist sowie ein Befestigungsmittel, mit welchem das Gehäuse an der Anbaufläche befestigbar ist.

Eine gattungsgemäße Sensorbaugruppe ist aus der WO 00/71978 A1 bekannt. In einem wasserdichten Gehäuse ist ein in einem Schutzmittel, beispielsweise eine Elastomermasse, eingebettetes Sensorelement vorgesehen, welches über einen Durchgangskanal mit der Atmosphäre oder einer unter Druck stehenden Umgebung beaufschlagbar ist. Von einer druckempfindlichen Fläche oder Membran des Sensorelements führt ein Kanal zu einem Rohrstutzen, der in ein Dichtelement einrasten kann, welches sich in einem Gehäuse oder einer Wand befindet. Dadurch ist die druckempfindliche Fläche des Sensors mit Umgebungsdruckschwankungen beaufschlagbar, ohne dass der Drucksensor Umgebungsfeuchtigkeit ausgesetzt ist. Zwischen der Auβenseite des Rohrstutzens und der Durchgangsöffnung der Wand ist ein Dichtkörper vorgesehen. Die Befestigung des Gehäuses erfolgt über Gehäuseansätze, die flanschartig an dem Gehäuse angeordnet sind und sich in einer Ebene, parallel zu der Wand, erstrecken. Die Befestigung erfolgt beispielsweise unter Verwendung von Schrauben. Hierzu ist es notwendig, dass in der Anbauwand zusätzlich zu der Durchgangsöffnung Öffnungen für die Schraubverbindung vorgesehen werden, welche zusätzlich abgedichtet werden müssen. Aus dem Dokument EP-A-1146326 ist auch bekannt, daß das Befestigungsmittel an der Durchgangsöffnung anliegt.

Die Abdichtung der Öffnungen der Befestigungselemente erfolgt üblicherweise über Dichtringe oder über, auf die Anbaufläche aufgeklebte Schaumdichtungen. Dieser Montageprozess ist aufwändig, da die Zuführung einer Vielzahl an Teilen (Befestigungsmittel, Dichtringe, Schaumdichtungen und dgl.) notwendig ist, die während der Montage gehandhabt werden müssen.

Es ist daher Aufgabe der vorliegenden Erfindung, eine gattungsgemäße Sensorbaugruppe derart weiterzubilden, dass eine vereinfachte Montage eines Gehäuses der Sensorbaugruppe an einer Anbaufläche ermöglicht wird.

Die erfindungsgemäße Sensorbaugruppe wird in Anspruch 1 definiert Bei der erfindungsgemäßen Sensorbaugruppe ist das Vorsehen weiterer Öffnungen, zusätzlich zu der Durchgangsöffnung, an welcher die Sensorbaugruppe montiert wird, entbehrlich. Demgemäß ist eine geringere Anzahl an Dichtmitteln vorzusehen, welche die Umgebung auf der einen Seite der Anbaufläche von der Umgebung auf der anderen Seite der Anbaufläche trennen. Weiterhin ermöglicht die Ausprägung der erfindungsgemäßen Sensorbaugruppe eine vereinfachte Montage an der Anbaufläche. Insbesondere kann das Befestigungsmittel mit einer geringeren Anzahl an Bauteilen ausgebildet werden, im Vergleich zu herkömmlichen Anordnungen gemäß dem Stand der Technik.

Die erfindungsgemäße Sensorbaugruppe kann an einer Seite der Anbaufläche angeordnet werden, die beispielsweise einen Feuchtraum von einem Trockenraum trennt, wie dies in Kraftfahrzeugen der Fall sein kann. Ein durch die Sensorbaugruppe zu sensierender Parameter kann durch die Wand hindurch erfasst werden, wobei sichergestellt ist, dass beispielsweise elektronische Schaltkreise und dgl. vor Einflüssen der jenseits der Wand vorhandenen schädlichen Umgebungsbedingungen geschützt sind. Die Sensorbaugruppe kann beispielsweise zum Sensieren von Temperaturen, Feuchtigkeiten, Druckschwankungen usw. geeignet sein.

Eine konstruktiv einfache Ausgestaltung ergibt sich dadurch, dass das Befestigungsmittel gemäß einer Ausführungsform von dem Dichtkörper zumindest teilweise umhüllt ist. Dabei können das Befestigungsmittel und der Dichtkörper als eine integrale Einheit ausgebildet sein, welche z.B. unter Verwendung eines Zwei-Komponenten-Spritzverfahrens gefertigt sind.

Die erfindungsgemäße Sensorbaugruppe ergibt sich durch eine Ausführungsform, in der das Befestigungsmittel aus einer Schnappverbindung und einem Haltemittel gebildet ist. Diese Ausgestaltung macht das Vorsehen von separaten, im Rahmen der Montage zu handhabenden Befestigungsmitteln, wie z.B. Schrauben, Müttern und Bolzen, entbehrlich.

Zweckmäßigerweise ist das Befestigungsmittel durch einen Schnapphaken mit einem betätigbaren Halteabschnitt und einem, der Durchgangsöffnung zugewandten, Rücken ausgebildet, wobei der Rücken in einem Winkel zu einer Einschubrichtung des Gehäuses ausgebildet ist, und wobei ein, der Durchgangsöffnung zugewandtes, Ende des Rückens über eine an der Anbaufläche abstützbare Schulter mit dem Halteabschnitt verbunden ist, wenn das Gehäuse an der Anbaufläche montiert ist. Diese zweckmäßige Ausgestaltung des Befestigungsmittels ermöglicht auch nach dem Anbau der Sensorbaugruppe an der Anbaufläche ein Lösen und Entfernen der Sensorbaugruppe von dieser. Darüber hinaus ist eine sog. Go-NoGo-Funktion integriert, welche ein sog. Halbstecken der Sensorbaugruppe bei der Montage an der Anbaufläche verhindert, wodurch Undichtigkeiten nach dem Verbau vermieden werden können. Die Go-NoGo-Funktion wird durch die Ausgestaltung des Schnapphakens bereitgestellt, welcher sich bei der Montage verformt und aufgrund seiner Rückstellkraft, die durch den an der Durchgangsöffnung angreifenden Rücken ausgeübt wird, die Sensorbaugruppe aus der Durchgangsöffnung auswirft. Die Rückstellkraft wird verständlicherweise nur solange aufgebracht, solange die Sensorbaugruppe nicht in ihrer korrekten Endposition ist.

In einer weiteren Ausführungsform weist das Haltemittel einen Anlageabschnitt auf, der dazu ausgebildet ist, eine durch die Schnappverbindung aufgebrachte Kraft aufzunehmen, welche in einer Ebene der Durchgangsöffnung wirkt, wenn das Gehäuse an der Anbaufläche montiert ist. Vorzugsweise ist der Anlageabschnitt des Haltemittels an dem Gehäuse gegenüberliegend der Schnappverbindung angeordnet. Hierdurch ist ein definierter Sitz der Sensorbaugruppe in der Durchgangsöffnung bereitgestellt.

Es ist weiterhin bevorzugt, wenn zwischen dem Anlageabschnitt und der Durchgangsöffnung ein Abschnitt des Dichtkörpers angeordnet ist. Hierdurch kann die Dichtigkeit bei verbauter Sensorbaugruppe an der Anlagefläche gewährleistet werden.

Das Haltemittel weist in einer weiteren Ausführungsform eine Schulter auf, welche eine senkrecht zur Ebene der Durchgangsöffnung wirkende Kraft aufnimmt, wobei sich die Schulter an der Anbaufläche abstützt, wenn das Gehäuse an der Anbaufläche montiert ist.

In einer weiteren Ausführungsform kann das Haltemittel einen Riegel umfassen, der sich am Rand der Durchgangsöffnung oder an einer davon separaten, weiteren Durchgangsöffnung abstützt und einen Abschnitt aufweist, der eine senkrecht zur Ebene der Durchgangsöffnung wirkende Kraft aufnimmt, wobei sich die Schulter an der Anbaufläche abstützt, wenn das Gehäuse an der Anbaufläche montiert ist.

Eine andere Ausgestaltung sieht vor, dass der Dichtkörper eine das Gehäuse zumindest teilweise umlaufende Auflageschulter aufweist, welche eine senkrecht zur Ebene der Durchgangsöffnung wirkende Kraft aufnimmt, wobei sich die Auflageschulter an der Anbaufläche abstützt, wenn das Gehäuse an der Anbaufläche montiert ist. Der Dichtkörper übernimmt damit nicht nur eine abdichtende Funktion, sondern sorgt auch für einen korrekten Sitz der Sensorbaugruppe an der Anbaufläche.

Es ist bevorzugt, wenn das Befestigungsmittel einstückig und integral mit dem Gehäuse ausgebildet ist, da dann bei der Montage lediglich ein einziges Bauteil handzuhaben ist.

Das Befestigungsmittel und der Dichtkörper sind einem Zwei-Komponenten-Spritzverfahren integral gebildet, wodurch einerseits eine einfache Fertigung und Handhabung und andererseits eine optimale Dichtigkeit erzielbar sind.

Prinzipiell kann das Gehäuse im Querschnitt eine beliebige Form aufweisen, wobei zweckmäßigerweise ein im Wesentlichen runder oder ovaler Querschnitt bevorzugt ist. Die Abweichung von einer symmetrischen oder rotationssymmetrischen Gestalt ermöglicht zudem die Bereitstellung einer Verdrehsicherung.

In einer Ausführungsform ist in dem Gehäuse ein Sensorelement angeordnet, wobei das Sensorelement z.B. ein Drucksensor ist. Das Sensorelement kann auch als Temperatursensor oder zur Detektion von Feuchtigkeiten ausgebildet sein.

In einer konkreten Verkörperung stellt die erfindungsgemäße Sensorbaugruppe einen Seitenairbag-Satelliten dar.

Es ist mit der vorliegenden Erfindung gelungen, eine Sensorbaugruppe bereitzustellen, welche eine vereinfachte Montage an einer Anbaufläche ermöglicht. Aufgrund einer integrierten Go-NoGo-Funktion ist die Gefahr einer Fehl- oder Falschmontage mit daraus resultierenden Undichtigkeiten minimiert. Dadurch, dass das Befestigungsmittel an der Durchgangsöffnung angreift oder anliegt, um eine mechanische Befestigung des Gehäuses an der Anbaufläche zu bewirken, ist die Anzahl der Teile der Sensorbaugruppe reduziert. Die erfindungsgemäße Sensorbaugruppe lässt sich darüber hinaus vollumfänglich in einem Spritzverfahren fertigen, wobei bei Verwendung eines Zwei-Komponenten-Spritzverfahrens sogar der Dichtkörper integral an das Gehäuse der Sensorbaugruppe anformbar ist.

Die Erfindung wird nachfolgend anhand der Figuren näher erläutert. Es zeigen:
- Fig. 1: eine Draufsicht auf eine an einer Anbaufläche montierte Sensorbaugruppe von einer Montagesei- te der Anbaufläche her,
- Fig. 2A, 2B: jeweils eine Querschnittsdarstellung der in der Anbaufläche montierten Sensorbaugruppe in einer ersten und einer zweiten Ausführungsform,
- Fig. 3A, 3B: jeweils eine Draufsicht auf eine in der Anbau- fläche montierte Sensorbaugruppe in der ersten und der zweiten Ausführungsform,
- Fig. 4A, 4B: jeweils eine Ansicht der Anbaufläche zur Monta- ge der Sensorbaugruppe gemäß dem ersten und dem zweiten Ausführungsbeispiel.

In der nachfolgenden Beschreibung sind in den beschriebenen Ausführungsbeispielen gleiche Merkmale mit gleichen Bezugszeichen versehen.

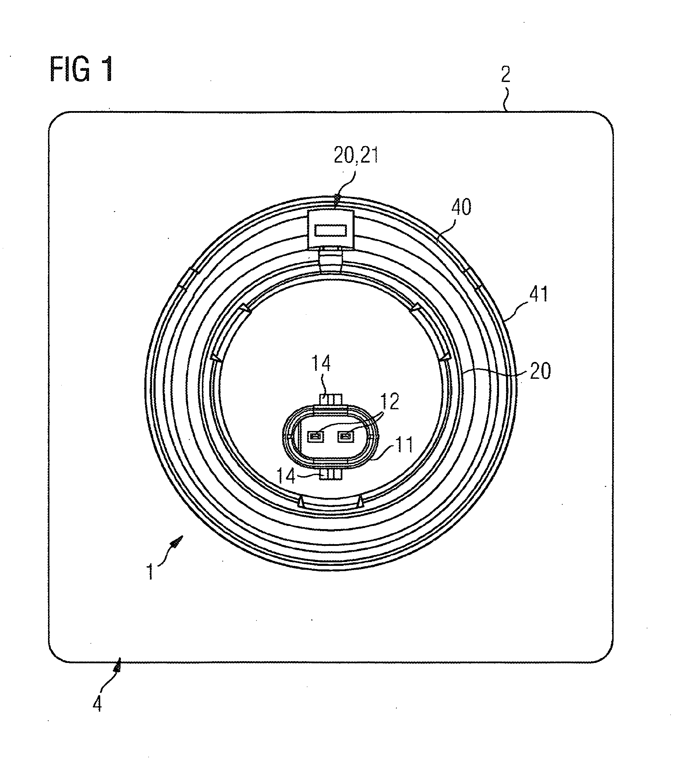

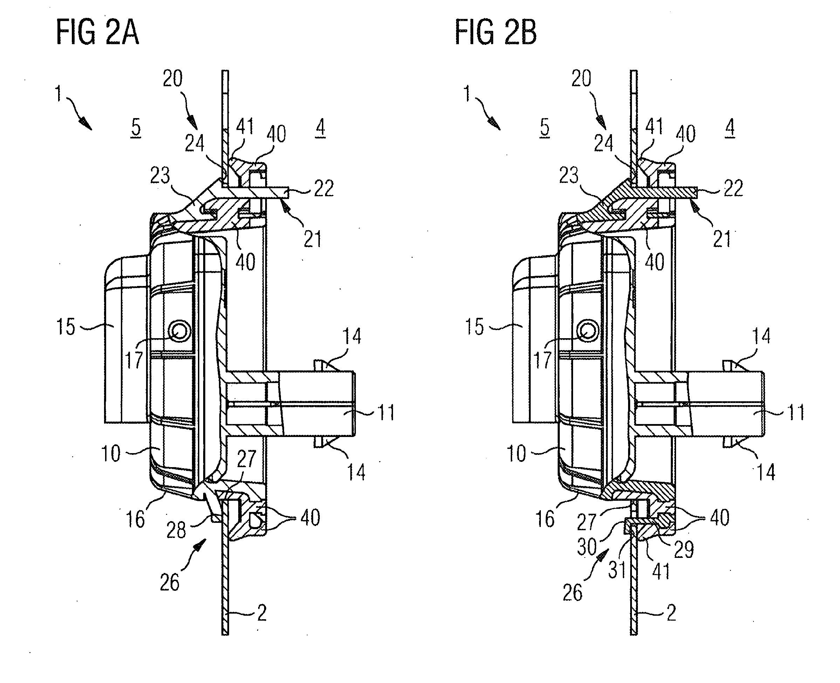

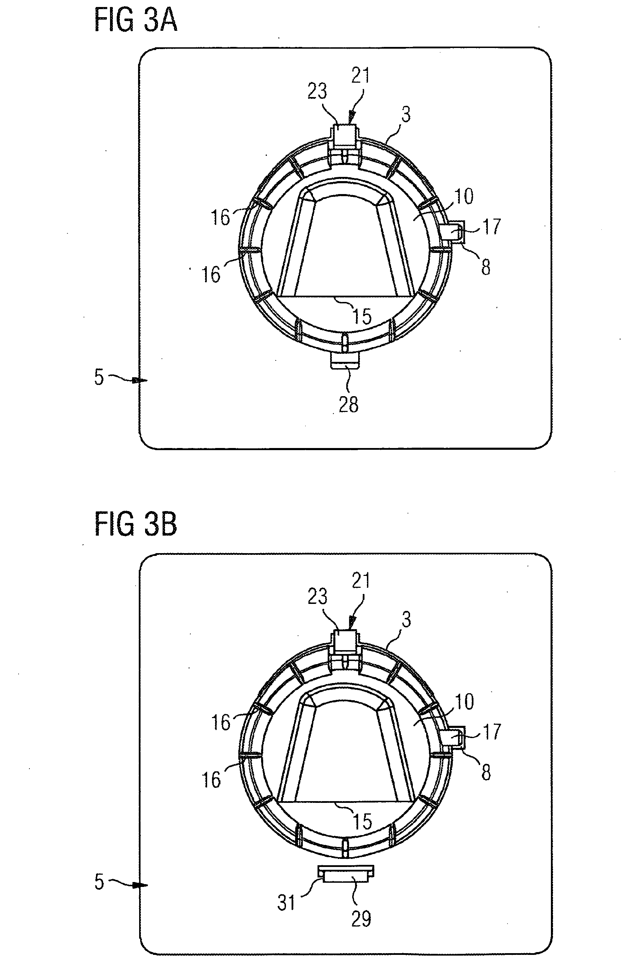

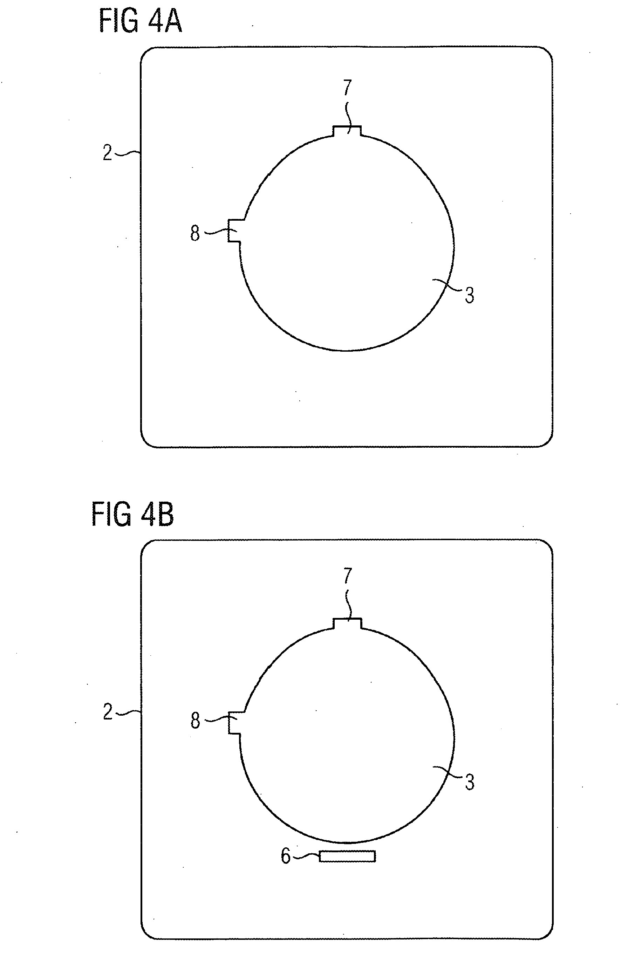

Die Fig. 1 bis 3 zeigen jeweils eine Sensorbaugruppe 1, die an einer Anbaufläche 2 montiert ist. Die Fig. 1, 2A und 3A beziehen sich hierbei auf eine erste Ausführungsvariante, die Fig. 2B und 3B auf eine zweite Ausführungsvariante. Fig. 4A zeigt eine zur ersten Ausführungsform korrespondierende Anbaufläche, während die Anbaufläche der Fig. 4B der zweiten Ausführungsform zugeordnet ist.

Die Sensorbaugruppe 1 umfasst ein Gehäuse 10, welches zur Aufnahme einer elektronischen Schaltung ausgebildet ist. Die elektronische Schaltung kann z.B. für einen sog. Seitenairbag-Satelliten ausgebildet sein und ist in dem Gehäuse 10 vor Umwelteinflüssen geschützt. Insbesondere umfassen die elektronischen Komponenten ein Sensorelement, wie z.B. einen Drucksensor, welches zur Aufnahme von äußeren Umgebungseinflüssen ausgebildet ist.

Ein derartiger Seitenairbag-Sensor wird in einem Kraftfahrzeug z.B. in einer Seitentür angeordnet. Die Anbaufläche 2 stellt beispielsweise eine Trennwand in einem Kraftfahrzeug dar, wobei eine mit dem Bezugszeichen 4 gekennzeichnete Montageseite der Anbaufläche 2 einem Trockenraum zugewandt ist, während eine auf der gegenüberliegenden Rückseite 5 der Anbaufläche 2 gelegene Seite einem Nass- oder Feuchtraum zugewandt ist.

Fig. 1 zeigt die an der Anbaufläche 2 montierte Sensorbaugruppe 1 von der Montageseite 4 der Anbaufläche 2 her. Das Gehäuse 10 ist in einer Durchgangsöffnung 3 der Anbaufläche 2 angeordnet und in der Durchgangsöffnung 3 über ein Befestigungsmittel 20 fixiert. Das Befestigungsmittel 20 umfasst einen Schnapphaken 21 sowie ein in Fig. 1 nicht gezeigtes Haltemittel 26. In der Draufsicht der Fig. 1 ist von dem Schnapphaken 21 ein sich in Richtung des Betrachters erstreckender Halteabschnitt 22 erkennbar. Die Halterung und Fixierung des Gehäuses 10 in der Montageöffnung 3 erfolgt ausschließlich über den Schnapphaken 21, wobei das Haltemittel 26 einen definierten Fixierpunkt zum Erzeugen einer Gegenkraft darstellt.

Umfangsseitig des Gehäuses 10 ist ein Dichtkörper 40 ausgebildet, welcher zwischen der Außenseite des Gehäuses 10 und der Durchgangsöffnung 3 der Anbaufläche 2 angeordnet ist. Besonderheit des Dichtkörpers 40 ist, dass dieser den Schnapphaken 21 sowie das Haltemittel 26 umhüllt, so dass auch an den haltenden Punkten keinerlei undichte Stelle entsteht. Um einen dichten Abschluss zu erhalten, schmiegt sich eine Auflageschulter 41, welche gleichzeitig eine haltende Funktion übernimmt, an den umfangsseitigen Rand der Montageöffnung 3 an.

Aus der Zeichnungsebene heraus erstreckt sich ferner ein Kontaktbecher 11 mit darin angeordneten Kontaktstiften 12 zur mechanischen und elektrischen Kontaktierung der Sensorbaugruppe 1. Um eine sichere Befestigung eines Kontaktsteckers zu ermöglichen, sind seitlich an dem beispielhaft annähernd oval ausgebildeten Kontaktbecher 11 zwei Vorsprünge 14 ausgebildet, welche in etwa flügelartig ausgebildet sind.

Der Aufbau einer erfindungsgemäßen Sensorbaugruppe 1 geht besser aus der Querschnittsdarstellung der Fig. 2 hervor. Es wird zunächst lediglich auf das Ausführungsbeispiel gemäß den Fig. 2A und 3A eingegangen. Unterschiede des zweiten Ausführungsbeispiels gemäß den Fig. 2B und 3B werden im Anschluss herausgestellt.

Aus Fig. 2A ist ersichtlich, dass der Dichtkörper 40 das in etwa kreisrund gestaltete Gehäuse 10 umlaufend umgibt und zwischen der Außenseite des Gehäuses 10 und der Durchgangsöffnung 3 der Anbaufläche 2 angeordnet ist. Die Schnittdarstellung zeigt weiterhin, dass der Dichtkörper das Befestigungsmittel 20 umgibt. Das Befestigungsmittel 20 und der Dichtkörper 40 können beispielsweise in einem Zwei-Komponenten-Spritzgussverfahren integral miteinander ausgebildet sein. Für das Befestigungsmittel 20 wird dabei ein Kunststoff mit größerer Härte verwendet, während der Kunststoff des Dichtkörpers eine größere Elastizität aufweist. Um eine stabile mechanische Verbindung von Befestigungsmittel 20 und Dichtkörper 40 zu erzielen, können im Befestigungsmittel 20 eine oder mehrere Öffnungen 25 vorgesehen sein.

Gut zu erkennen ist die Auflageschulter 41 des Dichtkörpers 40, welche sich von der Montageseite 4 her umlaufend der Durchgangsöffnung 3 gegen die Anbaufläche 2 presst. Hierdurch wird ein dichter Abschluss von der Montageseite 4 zur Rückseite 5 der Anbaufläche bereitgestellt.

Das Befestigungsmittel 20 umfasst den Schnapphaken 21, welcher in der Fig. 2A oben angeordnet ist. Der Schnapphaken 21 ist durch einen Halteabschnitt 22 und einen, in einem Winkel angeordneten Rücken 23 gebildet. Der Rücken 23 und der Halteabschnitt 22 werden durch eine Schulter 24 verbunden, welche sich an die Anbaufläche 2 im montierten Zustand des Gehäuses 10 anlegt. Der Schnapphaken 21 kann über den Halteabschnitt 22 in Richtung des Inneren der Durchgangsöffnung 3 gepresst werden, wodurch die Schulter 24 nach unten gedrückt wird. Hierdurch kann das Gehäuse 10 durch eine Schwenkbewegung um das Haltemittel 26, welches um 180° gegenüberliegend an dem Gehäuse angeordnet ist, in Richtung der Montageseite 4 der Anbaufläche 2 verschwenkt werden. Hierdurch kann die Sensorbaugruppe 1 von der Anbaufläche 2 entfernt werden. Der Einbau erfolgt umgekehrt, indem das einen Anlageabschnitt 27 und eine Schulter 28 aufweisende Haltemittel mit seiner Schulter 28 von der Montageseite 4 her durch die Durchgangsöffnung 3 hindurch gesteckt, der Anlageabschnitt 27 an den Rand der Durchgangsöffnung 3 angelegt und eine Schwenkbewegung in Richtung der Rückseite 5 durchgeführt wird.

Das Befestigungsmittel 20 umfasst eine sog. Go-NoGo-Funktion. Diese Funktionalität verhindert das Verharren der Sensorbaugruppe in einer undefinierten Position, in der die Dichtigkeit nach der Montage an der Anbaufläche 2 nicht gewährleistet werden kann. Die Go-NoGo-Funktion wird durch den Rücken 23 des Schnapphakens 21 bereitgestellt. Der von dem Rand der Durchgangsöffnung 3 in Richtung des Inneren der Durchgangsöffnung 3 sich erstreckende Verlauf der Schulter bewirkt eine Rückstellkraft, welche das nicht verschnappte Gehäuse 10 in Richtung der Montageseite 4 zurückpresst. Dies bedeutet mit anderen Worten, erst wenn der Rücken 23 vollständig den Rand der Durchgangsöffnung 3 passiert hat, wobei dann die Auflageschulter 41 des Dichtkörpers 40 eine über die Komprimierbarkeit des Dichtkörpers 40 hinausgehende Bewegung verhindert, wird die Rückstellkraft durch den Rücken 23 nicht mehr aufgebracht. Diese Situation ist in Fig. 2 dargestellt. Aufgrund der Dimensionierung der Schulter 24 und der Auflageschulter 41 ergibt sich ein Kräftegleichgewicht, in welchem die Sensorbaugruppe 1 zuverlässig an der Anbaufläche 2 gehaltert wird.

Das Halteelement 26 dient, wie aus der vorherigen Beschreibung bereits deutlich wurde, zur Fixierung des Gehäuses 2 an einer, dem Schnapphaken 21 gegenüberliegenden, Position. Die Schulter 28 des Haltemittels 26 baut eine der Auflageschulter 41 entgegengerichtete Kraft auf. Der Anlageabschnitt 27 nimmt eine, in der Ebene der Anbaufläche 2 gerichtete Kraft auf.

Die Einheit aus Befestigungsmittel 20 und Dichtkörper 40 kann integral an dem Gehäuse 10 ausgebildet sein. Dies bedeutet, das Befestigungsmittel 20 und das Gehäuse 10 können beispielsweise im Rahmen des gleichen Spritzvorganges und aus dem gleichen Kunststoffmaterial oder aus unterschiedlichen Kunststoffmaterialien im Zwei-Komponenten-Spritzverfahren hergestellt werden.

Aus der Querschnittsdarstellung besser ersichtlich ist der sich in Richtung der Montageseite 4 erstreckende Kontaktbecher 11 mit den auf der Außenseite angeordneten Vorsprüngen 14 zur Verrastung mit einem (nicht dargestellten) Kontaktstecker. Auf der gegenüberliegenden Seite des Gehäuses 10 ist eine Hutze 15 ausgebildet, welche einen mechanischen Schutz für den im Inneren des Gehäuses angeordneten Sensor vor Feuchtigkeit darstellt. Die Hutze 15 weist z.B. an ihrer Unterseite eine Öffnung auf, so dass das Sensorelement in Kontakt mit der Umgebung auf der Rückseite 5 der Anbaufläche 2 steht. Die Draufsicht gemäß Fig. 3A zeigt die lediglich beispielhaft in etwa trapezförmige Gestalt der Hutze 15, welche in Blattrichtung nach unten die Öffnung aufweist.

Mit dem Bezugszeichen 17 ist ein Kodierzapfen bezeichnet, welcher sich aus der Zeichenebene heraus in Richtung des Betrachters erstreckt. Der Kodierzapfen 17 dient dazu, die korrekte Einbauposition der Sensorbaugruppe 1 an der Anbaufläche 2 sicherzustellen. Hierzu korrespondiert der Kodierzapfen 17 mit einer entsprechenden Aussparung 8 an der Durchgangsöffnung 3. Diese ist in Fig. 4A mit dem Bezugszeichen 8 gekennzeichnet. Die korrespondierende Anordnung von Kodierzapfen 17 und Aussparung 8 kann ferner in der Draufsicht von der Rückseite 5 her gut erkannt werden (Fig. 3A).

Sofern das Gehäuse 10, z.B. im Bereich zwischen zwei Versteifungsrippen 16, weitere optionale Bohrungen aufweist (nicht dargestellt), so können die Kodierzapfen als separates Teil nach der Endmontage eingebracht werden. Hierdurch ist eine Erhöhung der Variantenvielfalt möglich, da die Festlegung einer Variante erst am Ende der Montage erfolgt.

Wie aus den Fig. 2A und 3A ebenfalls ersichtlich ist, weist das Gehäuse 10 auf der Seite, welche der Rückseite 5 der Anbaufläche zugewandt ist, eine Mehrzahl an Versteifungsrippen 16 auf, welche lediglich optionaler Natur sind.

Die Draufsicht gemäß Fig. 3A zeigt ferner den an einer Aussparung 7 der Durchgangsöffnung 3 (vgl. Fig. 4A) anliegenden Rücken 23 des Schnapphakens 21. Die Aussparung 7, an welcher sich die Schulter des Rückens 23 abstützt, ist nicht zwingend, aufgrund der von dem Schnapphaken 21 auf die Durchgangsöffnung 3 wirkenden Kräfte ist jedoch eine waagerechte Aussparung vorteilhafter. Weiterhin erkennbar ist die sich an der Unterseite der Durchgangsöffnung 3 abstützende Schulter 28 des Haltemittels 26.

Im zweiten Ausführungsbeispiel, das in den Fig. 2A, 3A und 4A eine Schnittansicht von der Seite sowie eine Draufsicht von der Rückseite der Anbaufläche 2 her und die dazu korrespondierende Anbaufläche 2 zeigt, ist das Haltemittel 26 auf andere Weise ausgebildet. Die Abstützung des Haltemittels 26 erfolgt in diesem Ausführungsbeispiel nicht unmittelbar am Rand der Durchgangsöffnung 3. Vielmehr ist eine weitere Durchgangsöffnung 6 (vgl. Fig. 4B) in der Anbaufläche 2 ausgebildet, welche gegenüberliegend der Aussparung für den Schnapphaken 21 angeordnet ist. Die weitere Durchgangsöffnung 6 weist eine in etwa längliche Form mit geraden Seitenkanten auf, durch welche ein riegelförmiges Element 29 mit einer Schulter 31 durchsteckbar ist. Die in der Ebene der Anbaufläche 2 wirkenden Kräfte werden nun nicht mehr durch den Anlageabschnitt 27, sondern vielmehr durch einen geraden Abschnitt 30 des Riegels 29 aufgenommen. Die Montage erfolgt in der gleichen Weise, wie sie oben beschrieben wurde. Eine Abdichtung erfolgt, indem der durch die Durchgangsöffnung 6 ragende Abschnitt des Riegels 29 mit einem Teil des Dichtkörpers umgeben wird oder, wie dies in der Querschnittsdarstellung der Fig. 2B gezeigt ist, die Auflageschulter 41 außerhalb dieses Abschnitts an der Anbaufläche 2 anliegt.

Mit der vorliegenden Erfindung ist eine Sensorbaugruppe geschaffen, bei der zusätzliche Befestigungsmittel eliminiert werden. Mangels Aussparungen, die zusätzlich zu der für die Sensorbaugruppe notwendigen Durchgangsöffnung vorgesehen sind, wird eine weniger aufwändige Dichtung benötigt. Die Befestigung erfolgt über einen Schnapphaken, wobei eine Go-NoGo-Funktion integriert ist. Dieses Merkmal verhindert ein sog. "Halbstecken" der Sensorbaugruppe und damit Undichtigkeiten nach dessen Montage an der Anbaufläche. Die Funktionalität wird durch den Schnapphaken bereitgestellt, der bei der Montage verformt wird und aufgrund seiner Rückstellkraft die Sensorbaugruppe aus der Durchgangsöffnung auswirft, solange diese nicht ihre Endlage in der Anbaufläche erreicht hat. Eine, das Gehäuse umlaufende Dichtung, welche das Befestigungsmittel umgibt, dichtet die Sensorbaugruppe an der Anbaufläche ab. Dabei ist es auf einfache Weise möglich, unterschiedliche Dicken der Anbaufläche durch Modifikationen des Dichtkörpers vorzusehen. Die Dicke der Anbaufläche kann auch über die weiche, flexible Dichtung ausgeglichen werden.

Die erfindungsgemäße Sensorbaugruppe kann auf einfache Weise von der Anbaufläche demontiert werden. Dies ist möglich, da der Verriegelungsmechanismus von der Montageseite der Anbaufläche her zugänglich ist.

Die Möglichkeit der integralen Ausgestaltung von Gehäuse, Befestigungsmittel und Dichtkörper, z.B. mittels Zwei-Komponenten-Spritztechnik, erlaubt eine einfache und kostengünstige Herstellung. Unabhängig davon ist es auch möglich, das Gehäuse und die Einheit aus Befestigungsmittel und Dichtkörper separat herzustellen und in einem weiteren Verarbeitungsschritt miteinander zu montieren.

Es besteht die Möglichkeit, die Sensorbaugruppe auf einfache Weise mittels einem oder mehrerer Kodierzapfen zu kodieren. Hierzu können in dem Gehäuse bereits Öffnungen vorgesehen sein. Die Kodierzapfen können zum einen im Rahmen der Fertigung kennzeichnen, dass die Sensorbaugruppe geprüft wurde und dienen andererseits einer optischen Unterscheidbarkeit, z.B. bei unterschiedlichen elektronischen Komponenten. Die Sicherheit der Montage wird erhöht, wenn die Durchgangsöffnung mit einer entsprechenden Aussparung für den oder die Kodierzapfen versehen ist.

## Patentansprüche

1. Sensorbaugruppe mit
- einem Gehäuse (10), das an einer Durchgangsöffnung (3) einer Anbaufläche (2) montierbar ist, durch welche Durchgangsöffnung (3) das Gehäuse (10) der Sensorbaugruppe zumindest teilweise durchragt, wenn das Gehäuse (10) an der Anbaufläche (2) angeordnet ist,
- einem Dichtkörper (40), der zwischen der Außenseite des Gehäuses (10) und der Durchgangsöffnung (3) der Anbaufläche (2) vorgesehen ist,
- einem Befestigungsmittel (20), mit welchem das Gehäuse (10) an der Anbaufläche (2) befestigbar ist, wobei
- das Befestigungsmittel (20) an der Durchgangsöffnung (3) anliegt, um eine mechanische Befestigung des Gehäuses (10) an der Anbaufläche (2) zu bewirken.
**dadurch gekennzeichnet, dass**
- das Befestigungsmittel (20) aus einer Schnappverbindung und einem Haltemittel (26) gebildet ist.

2. Sensorbaugruppe nach an Anspruch 1,
**dadurch gekennzeichnet, dass** das Befestigungsmittel (20) von dem Dichtkörper (40) zumindest teilweise umhüllt ist.

3. Sensorbaugruppe nach einem der vorherigen Ansprüche,
**dadurch gekennzeichnet, dass** das Befestigungsmittel (20) durch einen Schnapphaken (21) mit einem betätigbaren Halteabschnitt (22) und einem, der Durchgangsöffnung (3) zugewandten, Rücken (23) ausgebildet ist, wobei der Rücken (23) in einem Winkel zu einer Einschubrichtung (A) des Gehäuses (10) ausgebildet ist, und wobei ein, der Durchgangsöffnung (3) zugewandtes, Ende des Rückens (23) über eine an der Anbaufläche (2) abstützbare Schulter (24) mit dem Halteabschnitt (22) verbunden ist, wenn das Gehäuse (10) an der Anbaufläche (2) montiert ist.

4. Sensorbaugruppe nach einem der Ansprüche 2 bis 3,
**dadurch gekennzeichnet, dass** das Haltemittel (26) einen Anlageabschnitt (27) aufweist, der dazu ausgebildet ist, eine durch die Schnappverbindung aufgebrachte Kraft aufzunehmen, welche in einer Ebene der Durchgangsöffnung (3) wirkt, wenn das Gehäuse (10) an der Anbaufläche (2) montiert ist.

5. Sensorbaugruppe nach Anspruch 4,
**dadurch gekennzeichnet, dass** der Anlageabschnitt (27) des Haltemittels (26) an dem Gehäuse (10) gegenüberliegend der Schnappverbindung angeordnet ist.

6. Sensorbaugruppe nach Anspruch 4 oder 5,
**dadurch gekennzeichnet, dass** zwischen dem Anlageabschnitt (27) und der Durchgangsöffnung (3) ein Abschnitt des Dichtkörpers (40) angeordnet ist.

7. Sensorbaugruppe nach einem der Ansprüche 4 bis 6,
**dadurch gekennzeichnet, dass** das Haltemittel (26) eine Schulter (28) aufweist, welche eine senkrecht zur Ebene der Durchgangsöffnung (3) wirkende Kraft aufnimmt, wobei sich die Schulter (28) an der Anbaufläche (2) abstützt, wenn das Gehäuse (10) an der Anbaufläche (2) montiert ist.

8. Sensorbaugruppe nach einem der Ansprüche 4 bis 6,
**dadurch gekennzeichnet, dass** das Haltemittel (26) einen Riegel (29) umfasst, der sich am Rand der Durchgangsöffnung (3) oder an einer davon separaten, weiteren Durchgangsöffnung (6) abstützt und einen Abschnitt aufweist, der eine senkrecht zur Ebene der Durchgangsöffnung (3) wirkende Kraft aufnimmt, wobei sich die Schulter an der Anbaufläche (2) abstützt, wenn das Gehäuse (10) an der Anbaufläche (2) montiert ist.

9. Sensorbaugruppe nach einem der vorherigen Ansprüche,
**dadurch gekennzeichnet, dass** der Dichtkörper (40) eine das Gehäuse (10) zumindest teilweise umlaufende Auflageschulter (41) aufweist, welche eine senkrecht zur Ebene der Durchgangsöffnung (3) wirkende Kraft aufnimmt, wobei sich die Auflageschulter (41) an der Anbaufläche (2) abstützt, wenn das Gehäuse (10) an der Anbaufläche (2) montiert ist.

10. Sensorbaugruppe nach einem der vorherigen Ansprüche,
**dadurch gekennzeichnet, dass** das Befestigungsmittel (20) einstückig und integral mit Gehäuse (10) ausgebildet ist.

11. Sensorbaugruppe nach einem der vorherigen Ansprüche,
**dadurch gekennzeichnet, dass** das Befestigungsmittel (20) und der Dichtkörper (40) in einem Zwei-Komponenten-Spritzverfahren integral gebildet sind.

12. Sensorbaugruppe nach einem der vorherigen Ansprüche,
**dadurch gekennzeichnet, dass** das Gehäuse (10) im Querschnitt ein im Wesentlichen rund oder oval ist.

13. Sensorbaugruppe nach einem der vorherigen Ansprüche,
**dadurch gekennzeichnet, dass** in dem Gehäuse (10) ein Sensorelement angeordnet ist.

14. Sensorbaugruppe nach einem der vorherigen Ansprüche,
**dadurch gekennzeichnet, dass** das Sensorelement ein Drucksensor ist.

15. Sensorbaugruppe nach einem der vorherigen Ansprüche,
**dadurch gekennzeichnet, dass** diese ein Seitenairbag-Satellit ist.

## Claims

1. Sensor module having
- a housing (10) that can be mounted at a feed-through opening (3) of a mounting surface (2), through which feed-through opening (3) the housing (10) of the sensor module at least partially projects when the housing (10) has been positioned on the mounting surface (2),
- a sealing body (40) provided between the exterior of the housing (10) and the feed-through opening (3) of the mounting surface (2),
- a securing means (20) by means of which the housing (10) can be secured on the mounting surface (2), with
- the securing means (20) being applied against the feed-through opening (3) for mechanically securing the housing (10) on the mounting surface (2),
**characterised in that**
- the securing means (20) is formed from a snap-in connector and a retention means (26).

2. Sensor module according to claim 1,
**characterised in that**
the securing means (20) is at least partially surrounded by the sealing body (40).

3. Sensor module according to one of the preceding claims,
**characterised in that**
the securing means (20) is embodied by a snap-in fastener (21) having an actuatable retaining section (22) and a back (23) facing the feed-through opening, with the back (23) being embodied at an angle to an insertion direction (A) of the housing (10) and with an end, facing the feed-through opening (3), of the back (23) being joined via a shoulder (24) that can be supported on the mounting surface (2) to the retaining section (22) when the housing (10) has been mounted on the mounting surface (2).

4. Sensor module according to one of claims 2 to 3,
**characterised in that**
the retention means (26) has a bearing section (27) embodied for taking up a force that is exerted by the snap-in connector and acts in a plane of the feed-through opening (3) when the housing (10) has been mounted on the mounting surface (2).

5. Sensor module according to claim 4,
**characterised in that**
the bearing section (27) of the retention means (26) is located on the housing (10) opposite the snap-in connector.

6. Sensor module according to claim 4 or 5,
**characterised in that**
a section of the sealing body (40) is located between the bearing section (27) and the feed-through opening (3).

7. Sensor module according to one of claims 4 to 6,
**characterised in that**
the retention means (26) has a shoulder (28) that takes up a force acting perpendicularly to the plane of the feed-through opening (3), with the shoulder (28) being supported on the mounting surface (2) when the housing (10) has been mounted on the mounting surface (2).

8. Sensor module according to one of claims 4 to 6,
**characterised in that**
the retention means (26) includes a latch (29) that is supported on the edge of the feed-through opening (3) or on a further feed-through opening (6) separate from it and has a section that takes up a force acting perpendicularly to the plane of the feed-through opening (3), with the shoulder being supported on the mounting surface (2) when the housing (10) has been mounted on the mounting surface (2).

9. Sensor module according to one of the preceding claims,
**characterised in that**
the sealing body (40) has a bearing shoulder (41) that at least partially encompasses the housing (10) and takes up a force acting perpendicularly to the plane of the feed-through opening (3), with the bearing shoulder (41) being supported on the mounting surface (2) when the housing (10) has been mounted on the mounting surface (2).

10. Sensor module according to one of the preceding claims,
**characterised in that**
the securing means (20) is embodied as a single piece with the housing (10) and integrally therewith.

11. Sensor module according to one of the preceding claims,
**characterised in that**
the securing means (20) and the sealing body (40) are formed integrally by means of a two-component injection-moulding method.

12. Sensor module according to one of the preceding claims,
**characterised in that**
the housing (10) is substantially round or oval in cross-section.

13. Sensor module according to one of the preceding claims,
**characterised in that**
a sensor element is located in the housing (10).

14. Sensor module according to one of the preceding claims,
**characterised in that**
the sensor element is a pressure sensor.

15. Sensor module according to one of the preceding claims,
**characterised in that**
said module is a side airbag satellite.

## Revendications

1. Module de détection, comprenant :
- un boîtier (10), qui peut être monté dans une ouverture de passage (3) d'une surface de montage (2), à travers laquelle ouverture de passage (3) le boîtier (10) du module de détection dépasse au moins partiellement lorsque le boîtier (10) est agencé sur la surface de montage (2),
- un corps d'étanchéité (40), qui est prévu entre la face externe du boîtier (10) et l'ouverture de passage (3) de la surface de montage (2),
- un moyen de fixation (20), à l'aide duquel le boîtier (10) peut être fixé sur la surface de montage (2), dans lequel
- le moyen de fixation (20) est appliqué sur l'ouverture de passage (3) pour assurer une fixation mécanique du boîtier (10) sur la surface de montage (2),
**caractérisé en ce que**
- le moyen de fixation (20) est formé d'un raccord à encliquetage et d'un moyen de retenue (26).

2. Module de détection selon la revendication 1,
**caractérisé en ce que**
le moyen de fixation (20) est enveloppé au moins partiellement par le corps d'étanchéité (40).

3. Module de détection selon l'une quelconque des revendications précédentes,
**caractérisé en ce que**
le moyen de fixation (20) est formé d'un crochet d'encliquetage (21) avec une section de retenue (22) actionnable et un dos (23) tourné vers l'ouverture de passage (3), dans lequel le dos (23) est conformé en faisant un angle avec une direction d'insertion (A) du boîtier (10) et dans lequel une extrémité du dos (23) tournée vers l'ouverture de passage (3) est raccordée, via un épaulement (24) qui peut s'appuyer sur la surface de montage (2), à la section de retenue (22) lorsque le boîtier (10) est monté sur la surface de montage (2).

4. Module de détection selon l'une quelconque des revendications 2 à 3,
**caractérisé en ce que**
le moyen de retenue (26) présente une section d'appui (27) qui est formée pour absorber une force appliquée par le raccord à encliquetage, qui agit dans un plan de l'ouverture de passage (3), lorsque le boîtier (10) est monté sur la surface de montage (2).

5. Module de détection selon la revendication 4,
**caractérisé en ce que**
la section d'appui (27) du moyen de retenue (26) est agencée sur le boîtier (10) en regard du raccord à encliquetage.

6. Module de détection selon la revendication 4 ou 5,
**caractérisé en ce que**
une section du corps d'étanchéité (40) est agencée entre la section d'appui (27) et l'ouverture de passage (3).

7. Module de détection selon l'une quelconque des revendications 4 à 6,
**caractérisé en ce que**
le moyen de retenue (26) présente un épaulement (28) qui absorbe une force agissant perpendiculairement au plan de l'ouverture de passage (3), l'épaulement (28) s'appuyant sur la surface de montage (2), lorsque le boîtier (10) est monté sur la surface de montage (2).

8. Module de détection selon l'une quelconque des revendications 4 à 6,
**caractérisé en ce que**
le moyen de retenue (26) comprend un verrou (29), qui s'appuie sur le bord de l'ouverture de passage (3) ou sur une autre ouverture de passage (6) séparée de cette dernière et présente une section qui absorbe une force agissant perpendiculairement au plan de l'ouverture de passage (3), l'épaulement s'appuyant sur la surface de montage (2), lorsque le boîtier (10) est monté sur la surface de montage (2).

9. Module de détection selon l'une quelconque des revendications précédentes,
**caractérisé en ce que**
le corps d'étanchéité (40) présente un épaulement d'appui (41) entourant au moins partiellement le boîtier (10), qui absorbe une force agissant perpendiculairement au plan de l'ouverture de passage (3), l'épaulement d'appui (41) s'appuyant sur la surface de montage (2), lorsque le boîtier (10) est monté sur la surface de montage (2).

10. Module de détection selon l'une quelconque des revendications précédentes,
**caractérisé en ce que**
le moyen de fixation (20) est réalisé d'un seul tenant et de manière intégrale avec le boîtier (10).

11. Module de détection selon l'une quelconque des revendications précédentes,
**caractérisé en ce que**
le moyen de fixation (20) et le corps d'étanchéité (40) sont formés de manière intégrale par un procédé d'injection à deux composants.

12. Module de détection selon l'une quelconque des revendications précédentes,
**caractérisé en ce que**
le boîtier (10) est sensiblement rond ou ovale en coupe transversale.

13. Module de détection selon l'une quelconque des revendications précédentes,
**caractérisé en ce que**
un élément de détection est agencé dans le boîtier (10).

14. Module de détection selon l'une quelconque des revendications précédentes,
**caractérisé en ce que**
l'élément de détection est un capteur de pression.

15. Module de détection selon l'une quelconque des revendications précédentes,
**caractérisé en ce que**
il s'agitd'un satellite de coussin gonflable (airbag) latéral.
